# EUROPÄISCHE PATENTSCHRIFT

(11) **EP 3 770 084 B1**
(45) Veröffentlichungstag und Bekanntmachung des Hinweises auf die Patenterteilung: **24.05.2023**
(21) Anmeldenummer: 19188647.2
(22) Anmeldetag: 26.07.2019
(51) Int. Cl.: B65G 43/08, B65G 47/14, A22C 11/00, A22C 17/00, A22C 11/02

(54) **WURSTHÜLLENSPEICHER MIT FÜLLSTANDÜBERWACHUNG**
SAUSAGE CASING STORAGE WITH LEVEL MONITORING
DISPOSITIF DE STOCKAGE DE BOYAUX DE SAUCISSES À SURVEILLANCE DE NIVEAU DE REMPLISSAGE

(43) Veröffentlichungstag der Anmeldung: 27.01.2021
(73) Patentinhaber: Albert Handtmann Maschinenfabrik GmbH & Co. KG, 88400 Biberach (DE)
(72) Erfinder: Schmid, Klaus, 88499 Riedlingen (DE); Betz, Andreas, 88471 Baustetten (DE); Schliesser, Gerhard, 88489 Wain (DE); Baechtle, Manfred, 88433 Schemmerhofen (DE); Strohm, Kurt, 88488 Attenweiler (DE); Merk, Jochen, 88416 Ochsenhausen (DE)
(74) Vertreter: Grünecker Patent- und Rechtsanwälte PartG mbB

(56) Entgegenhaltungen:
- EP-A1- 2 495 191
- EP-A1- 3 127 840
- DE-A1- 4 223 128
- US-A- 4 830 171

## Beschreibung

Die Erfindung betrifft ein Verfahren und eine Vorrichtung zum Bestimmen des Füllgrads an Darmraupen in einem Darmraupenspeicher bei der Wurstherstellung gemäß den Oberbegriffen der Ansprüche 1 und 10.

Ein solches Verfahren und eine solche Vorrichtung sind beispielsweise bereits aus der DE4223128 bekannt. Das Dokument offenbart ein Verfahren und eine Vorrichtung gemäß den Oberbegriffen der Ansprüche 1 und 10.

Bei der automatischen Wurstproduktion mit Abdrehlinien werden die gerafften Wursthüllen, das heißt, die Darmraupen, die für den Füllvorgang bereitgestellt sind, in einem Darmraupenspeicher bzw. Wursthüllenspeicher gelagert. Um diese einzeln in die Aufziehvorrichtung zu bewegen, werden sie mit Hilfe einer Lichtschranke und einem Schieber, der sich entlang einer schiefen Ebene bewegt, vereinzelt. Bei jedem Vereinzelungsvorgang wird jeweils nur eine Darmraupe über eine Vereinzelungskante in eine Aufziehvorrichtung bewegt. Der Schieber kann je nach Grad der Befüllung des Darmraupenspeichers mehrere Darmraupen in einer Reihe gleichzeitig hintereinanderliegend nach oben in Richtung der Vereinzelungskante bewegen. Wird der Schieber in eine obere Endposition gefahren, ohne dass die Lichtschranke eine Darmraupe detektiert, dann liegt keine Darmraupe mehr auf dem Schieber. Durch einen kompletten Rückhub unter die Zuführschräge können wieder weitere Darmraupen vor den Schieber rollen. Je nach Befüllgrad des Darmraupenspeichers bzw. je nach Kalibergröße, das heißt Durchmesser der Darmraupen, können sich eine oder mehrere Darmraupen vor dem Schieber befinden. Bei niedrigen Befüllgrad des Darmraupenspeichers rollt bei der Abwärtsbewegung nur noch eine Darmraupe vor den Schieber.

Hierbei tritt das Problem auf, dass der Bediener den Füllstand im Darmraupenspeicher ständig beobachten muss und die Darmraupen frühzeitig nachfüllen muss, damit der Produktionsprozess nicht mangels Darmraupen zum Stillstand kommt.

Hiervon ausgehend liegt der vorliegenden Erfindung die Aufgabe zugrunde, den Füllstand auf einfache und kostengünstige Art und Weise zu überwachen, ohne dass zusätzliche Sensoren notwendig sind.

Erfindungsgemäß wird diese Aufgabe durch die Merkmale der Ansprüche 1 und 10 gelöst.

Bei dem erfindungsgemäßen Verfahren werden Darmraupen in einem Darmraupenspeicher gespeichert. Mittels Schieber werden diese Darmraupen während eines ersten Hubzyklus in einer Reihe R₁ mit einer ersten Anzahl hintereinanderliegender Darmraupen entlang einer schiefen Ebene in Richtung einer Vereinzelungskante geschoben. Die Darmraupen werden dann nacheinander über die Vereinzelungskante geschoben und können einer Zentriereinrichtung übergeben werden. Nachdem die letzte Darmraupe der Reihe R₁ über die Vereinzelungskante geschoben wurde, bewegt sich der Schieber entlang der schiefen Ebene zurück und eine weitere Reihe R₂ mit einer zweiten Anzahl hintereinanderliegender Darmraupen kann vom Schieber aufgenommen werden und in einem weiteren Hubzyklus in Richtung Vereinzelungskante geschoben werden. Das heißt, dass sich die Anzahl der Darmraupen im Darmraupenspeicher verringert während sich die Hubzyklen nacheinander wiederholen. Gemäß der Erfindung kann nun der Füllgrad an Darmraupen im Darmraupenspeicher über die Anzahl der über die Vereinzelungskante geschobenen Darmraupen bestimmt werden. Das bedeutet, dass über die Steuerung der Füllgrad bestimmt werden kann, ohne dass zusätzliche Sensoren wie etwa ein Füllstandsmesser etc. notwendig sind. Somit kann sicher beurteilt werden, wann ein Nachfüllen des Darmraupenspeichers notwendig ist und sichergestellt werden, dass der Produktionsprozess nicht mangels Darmraupen zum Stillstand kommt.

Erfindungsgemäß wird der Füllgrad an Darmraupen im Darmraupenspeicher in Abhängigkeit der Anzahl der Darmraupen einer Reihe, die in einem Hubzyklus über die Vereinzelungskante geschoben werden, bevor der Schieber wieder zurückbewegt wird, insbesondere vollständig in einen Bereich unterhalb der schiefen Ebene zurückbewegt wird, bestimmt.

Mit abnehmendem Füllgrad rollen immer weniger Darmraupen auf den Schieber, das heißt, dass dann die Reihe an hintereinanderliegenden Darmraupen eine geringere Anzahl an Darmraupen aufweist als bei hohem Füllgrad. So kann die Steuerung der bestimmten Anzahl, das heißt der ermittelten Anzahl an Darmraupen in einer Reihe ( für das entsprechende Kaliber bzw. Durchmesser, das in die Steuerung eingegeben wurde), einen bestimmten Füllgrad zuordnen. Es kann zum Beispiel die Schlussfolgerung gezogen werden, dass sich zu einem bestimmten Zeitpunkt nur noch eine bestimmte Anzahl an Darmraupen im Speicher befindet. Der Vorteil dieser Vorgehensweise liegt darin, dass der Füllgrad bestimmt werden kann, auch wenn nicht bekannt ist, wie viele Darmraupen ursprünglich in den Darmraupenspeicher eingebracht wurden. Das heißt, wenn beispielsweise eine neue Packung an Darmraupen in den Darmraupenspeicher eingebracht wird und eine bestimmte Anzahl an Darmraupen vorab entnommen wurde, weil die Darmraupen defekt oder unbrauchbar sind, dennoch eine zuverlässige und genaue Aussage über den Füllgrad gemacht werden kann. Auch wenn eine Anlage in Betrieb genommen wird und der Darmraupenspeicher nur teilweise gefüllt ist, ohne zu wissen, wie viele Darmraupen sich nun tatsächlich im Darmraupenspeicher befinden, kann sofort mit dem Verfahren zum Bestimmen des Füllgrads begonnen werden.

Gemäß einer bevorzugten Ausführungsform erzeugt die Steuerung z.B. dann ein Signal, das heißt, ein Warnsignal für eine Anzeige, wenn die Anzahl der Darmraupen einer Reihe nur noch 1 ist. Dieses Warnsignal fordert den Bediener optisch und/oder akustisch auf, Darmraupen nachzufüllen. Wenn also der Schieber, nachdem er vollständig zurückbewegt wurde, bei einem folgenden Hubzyklus nur noch eine Darmraupe über die Vereinzelungskante schiebt, wird bestimmt, dass die Anzahl in der Reihe "1" ist. Abhängig von der Kalibergröße, welche der Steuerung bekannt ist, kann dann wiederrum, wie zuvor beschrieben, die Schlussfolgerung gezogen werden, dass sich zu diesem Zeitpunkt nur noch eine bestimmte (für jedes Darmkaliber empirisch ermittelte) Anzahl an Darmraupen im Speicher befinden. Ein entsprechendes von der Steuerung erzeugtes Signal entspricht dann einem Minimalfüllstand. Ein entsprechendes Warnsignal kann aber auch ausgegeben werden, wenn die Anzahl der Darmraupen größer ist als 1, das heißt, dass frühzeitig gewarnt wird, zum Beispiel bei einer Anzahl ab 3 Darmraupen in einer Reihe.

Gemäß der Erfindung ist im Bereich der Vereinzelungskante ein Sensor vorgesehen, insbesondere eine Lichtschranke, die erkennt, ob eine Darmraupe diesen Bereich passiert hat. Im Bereich der Vereinzelungskante bedeutet im oberen Bereich der schiefen Ebene bzw. auf der oberen Abrollebene hinter der Vereinzelungskante (wobei der Abstand des Sensors zur Kante in einem Bereich von 5 - 30 mm liegt. Wenn der Schieber in eine oberste Position bewegt wird und der Sensor kein Signal mehr ausgibt, kann davon ausgegangen werden, dass sich keine Darmraupe mehr vor dem Schieber befindet und der Schieber kann zurückgefahren werden.

Somit kann die Steuerung den Füllgrad mit Hilfe des ohnehin vorhandenen Sensors und insbesondere zusätzlich über den gespeicherten Darmraupendurchmesser und/oder die Position des Schiebers ermitteln.

In Abhängigkeit des bestimmten, im Sinne vom ermittelten, Füllgrads ( der für ein bestimmtes Kaliber der Anzahl der Darmraupen in einer Reihe bei einem Hubzyklus entspricht,) kann dann also ein Signal erzeugt werden und beispielsweise optisch und/oder akustisch angezeigt werden. Das Signal ändert sich vorzugsweise in Abhängigkeit des ermittelten Füllgrads. Somit kann der Bediener den Füllstand überwachen und rechtzeitig gewarnt werden.

Es ist auch möglich, dass bei Unterschreiten eines Mindestfüllgrads ein Warnsignal ausgegeben wird, das optisch und/oder akustisch angezeigt wird, das den Bediener erkennen lässt, dass ein Nachfüllen notwendig ist.

Es können beispielsweise auch Eskalationsstufen vorgesehen sein, von langsam, zunehmend schneller blinkend bis Dauerlicht am Bedienfeld oder an einer separaten Signallampe. Ein intermittierendes akustisches Signal kann entsprechend zunehmend schneller und/oder lauter ertönen.

Es ist möglich, dass zum Bestimmen die Anzahl der in einer Reihe während eines Hubzyklus über die Vereinzelungskante geschobenen Darmraupen über das Sensorsignal gezählt werden. Dazu kann ein Zähler die Sensorsignale zählen bzw. aufaddieren. Alternativ oder zusätzlich ist es möglich, dass die Anzahl auf der Grundlage der Position des Schiebers ermittelt wird, die er aufweist, wenn der Sensor im Bereich der Vereinzelungskante eine oberste Darmraupe einer Reihe detektiert und auf der Grundlage des Durchmessers der Darmraupen. Aus dem sich ergebenden Schieber /Sensorabstand und dem bekannten Durchmesser kann die Anzahl der Darmraupen vor dem Schieber ermittelt werden.

Diese Lösungen sind einfach mit den bestehenden Komponenten zu realisieren und daher besonders kostengünstig.

Alternativ ist es auch möglich, dass, wenn die Anzahl der eingebrachten Darmraupen im Darmraupenspeicher bekannt ist, einfach die Anzahl der Darmraupen, die über die Vereinzelungskante geschoben werden, gezählt wird, beispielsweise durch einen Zähler in der Steuerung, der die Signale des Sensors zählt bzw. aufaddiert. Ab einer bestimmten Anzahl von über die Vereinzelungskante geschobenen Darmraupen kann dann ein entsprechendes Signal für eine optische und/oder akustische Anzeige ausgegeben werden.

Es ist auch möglich, dass in Abhängigkeit des bestimmten Füllgrades ein Signal erzeugt wird, das veranlasst, dass automatisch Darmraupen über eine Zuführeinrichtung zugeführt werden, das heißt, wenn ein bestimmter Füllgrad unterschritten wird. Zusätzlich oder alternativ ist es auch möglich, die Produktionsgeschwindigkeit zu reduzieren, um eine kontinuierliche Produktion zu gewährleisten.

Eine Vorrichtung zum Durchführen des Verfahrens weist einen Schieber auf, der in einem ersten Hubzyklus eine Reihe mit einer ersten Anzahl hintereinanderliegender Darmraupen entlang einer schiefen Ebene über die Vereinzelungskante schieben kann und der sich zurückbewegen kann, nachdem die letzte Darmraupe der Reihe über die Vereinzelungskante geschoben wurde und dann eine Reihe mit einer zweiten Anzahl hintereinanderliegenden Darmraupen aufnehmen kann und in einem weiteren Hubzyklus in Richtung und über die Vereinzelungskante schieben kann. Erfindungsgemäß ist eine Steuerung vorgesehen, die derart ausgebildet ist, dass der Füllgrad an Darmraupen im Darmraupenspeicher über die Anzahl an Darmraupen, die über die Vereinzelungskante geschobenen werden, bestimmen kann.

Die vorliegende Erfindung wird nachfolgend unter Bezugnahme folgender Figuren näher erläutert.

Figur 1 zeigt schematisch eine erfindungsgemäße Vorrichtung im Querschnitt.

Figuren 2a bis 2d zeigen einen vereinfachten Teilausschnitt der in Figur 1 gezeigten Vorrichtung mit sich verändertem Füllgrad.

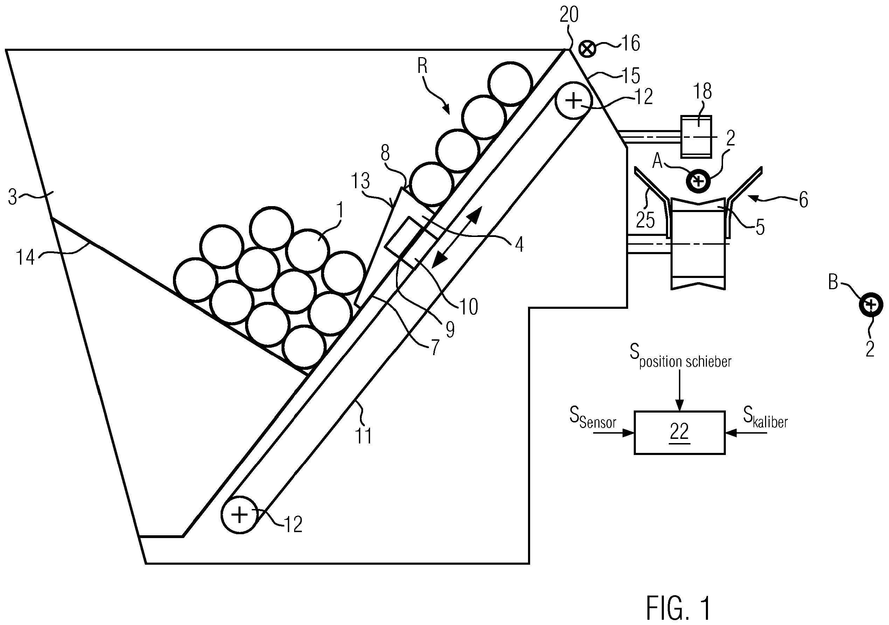

Figur 1 zeigt ein Ausführungsbeispiel einer Vorrichtung gemäß der vorliegenden Erfindung zum Vereinzeln von Darmraupen, wonach eine entsprechend vereinzelte Darmraupe 1 auf ein Füllrohr 2 aufgebracht werden kann.

Die Darmraupen 1 befinden sich im Darmraupenspeicher 3. Mit einem Schieber 4 werden die Darmraupen in einer Reihe R aufgenommen und in Richtung einer Vereinzelungskante 20 geschoben. Dann können sie beispielsweise in bekannter Weise einer Führungsfläche 5 einer Zentriereinrichtung 6 zugeführt werden, um auf ein Füllrohr 2 aufgezogen zu werden. Der Darmraupenspeicher 3 weist eine Bodenwand 7 in Form einer schiefen Ebene auf, die gegenüber der Horizontalen geneigt ist. Der Schieber 4 bewegt sich entlang dieser schiefen Ebene. Er weist eine Schiebefläche 8 auf, deren Abmessung an den Durchmesser der Darmraupen zum Beispiel vom Kaliber 13 bis 130 mm ausgebildet ist. Vom Schieber 4 wird jeweils nur eine Reihe R übereinanderliegender Darmraupen 1 in Richtung Vereinzelungskante 20 transportiert. Der Schieber 4 wird hier zum Beispiel über zwei Magnetkupplungen 9 entlang der Bodenwand 7 des Vorratsbehälters 3 geführt. Dabei ist zum Beispiel der Führungsmagnet 10 für die Magnetkopplung 9 an einem endlosen Förderband 11 befestigt, das über zwei Förderrollen 12 gelenkt wird. Der Schieber kann somit in als auch entgegen der Förderrichtung bewegt werden. Dabei kann der Antrieb über einen nicht dargestellten Servomotor erfolgen. Am oberen und unteren Ende der Bodenwand 7 des Darmraupenspeichers 3 kann jeweils ein Endschalter angeordnet sein, der von dem Schieber 4 ausgelöst wird und die Bewegungsrichtung des Schiebers 4 umkehren kann. Es ist aber auch möglich, dass der Schieber dann umkehrt, wenn keine Darmraupe mehr von einem Sensor 16, zum Beispiel einer Lichtschranke im Bereich der Vereinzelungskante 20 detektiert wird oder wenn von der Steuerung des Servomotors eine Endposition bestimmt wird.

Die Seite 13 des Schiebers 4, die entgegen der Förderrichtung angeordnet ist, ist als schräge Fläche ausgebildet, damit die Darmraupen 1 beim Zurückführen des Schiebers 4 zum unteren Ende der Bodenwand 7 nicht beschädigt werden. Der Darmraupenspeicher 3 weist auch eine Bodenfläche 14 auf, die in Richtung der Bodenwand 7 und auch zur Horizontalen geneigt ist. Dadurch rollen die im Darmraupenspeicher 3 vorhandenen Darmraupen 1 durch ihr Eigengewicht in Richtung des Schiebers 4, so dass sie von diesem zum oberen Ende der Bodenwand 7 gefördert werden. In der Bodenfläche 14 ist eine Vertiefung ausgebildet, die den Schieber 4, wenn dieser entgegen der Förderrichtung bewegt wird, soweit aufnimmt, dass die Schieberfläche 8 des Schiebers 4 bis hinter die Bodenfläche 14 zurückgeführt werden kann, so dass alle Darmraupen 1 aus dem Darmraupenspeicher 3 gefördert werden können.

An die Vereinzelungskante 20 schließt sich die Abrollfläche 15 an, über die die Darmraupen auf die Führungsfläche 5 der Zentriereinrichtung 6 gelangen.

Die Vorrichtung weist weiter eine Steuerung 22 auf, die derart ausgebildet ist, dass der Füllgrad an Darmraupen im Darmraupenspeicher 3 über die Anzahl der Darmraupen, die über die Vereinzelungskante 20 geschobenen werden bestimmt werden kann, wie nachfolgend noch näher erläutert wird. Dazu wertet die Steuereinrichtung 22 mehrere Signale aus. In die Steuerung 22 kann beispielsweise ein Signal S_{Kaliber} eingegeben werden, das den Durchmesser d der Darmraupen angibt. Ferner kann in die Steuerung 22 ein Signal S _{Position Schieber} beispielsweise von einer Steuerung eines Servoantriebs geleitet werden, das die Position des Schiebers angibt. Ferner kann auch ein Sensorsignal S_{Sensor} an die Steuerung 22 geleitet werden, das angibt, ob eine Darmraupe den Bereich des Sensors 16 passiert hat oder nicht.

Nachfolgend wird das erfindungsgemäße Verfahren näher erläutert. Die Darmraupen 1 werden zum Beispiel von einer Bedienperson aus einem Karton in den Darmraupenspeicher 3 gefüllt. Alternativ ist es auch möglich, dass die Darmraupen über eine automatische Zufuhreinrichtung ( nicht dargestellt) zugeführt werden. Aufgrund der schräg ausgebildeten Bodenfläche 14 rollen die Darmraupen 1 in Richtung des unteren Endes der schräg ausgebildeten Bodenwand 7.

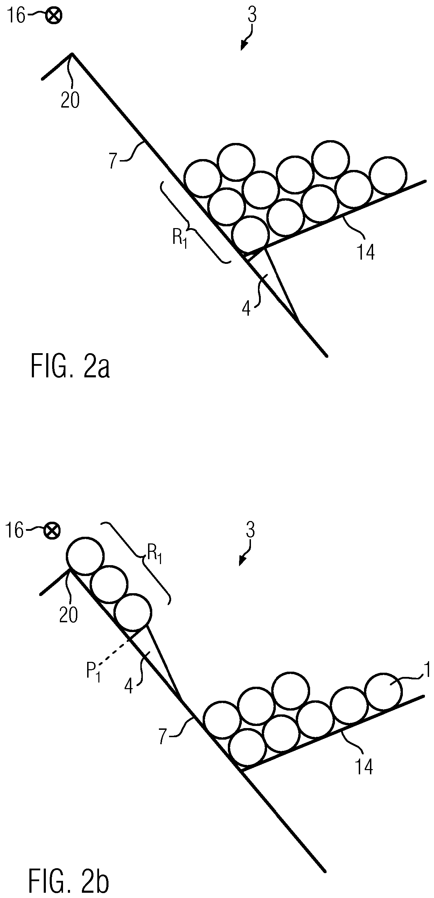

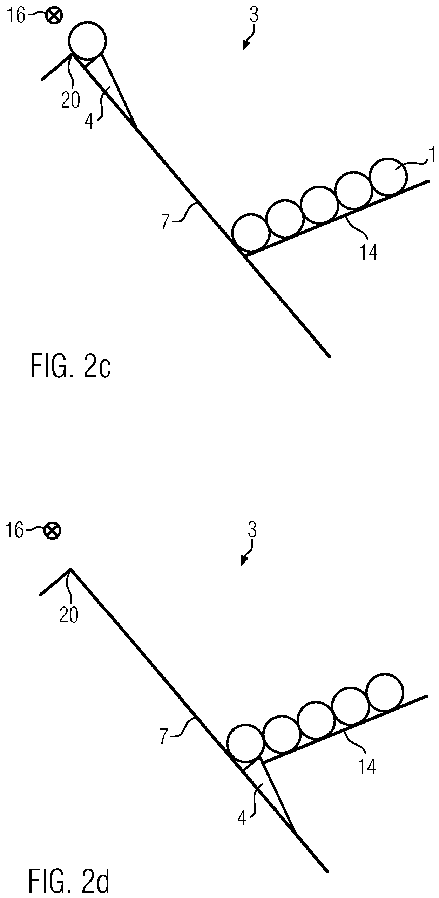

Wie aus Figur 2 hervorgeht, befindet sich der Schieber 4 zunächst unterhalb der Bodenfläche 14 des Darmraupenspeichers. Der Schieber 14 wird dann über den Servoantrieb nach oben in Richtung Vereinzelungskante 20 bewegt und nimmt eine Reihe R₁ der Darmraupen 1 auf. Hier ist die Anzahl an Darmraupen einer Reihe "3". Der Schieber 4 bewegt dann die Reihe R₁ zur Kante 20, bis, wie in Figur 2b dargestellt ist, die oberste Darmraupe über die Vereinzelungskante 20 rollt. Hier kann der Sensor 16, das heißt hier eine Lichtschranke, das kurzzeitige Vorhandensein der Darmraupe 1 detektieren. Die Darmraupe kann dann über die Abrollfläche 15 und den Zuführungssteg 25 auf die Führungsfläche 5 rollen. Durch die Steuerung 22 wird die Förderbewegung des Schiebers 4 gestoppt, so dass immer nur eine Darmraupe vereinzelt wird. Soll eine neue Darmraupe zentriert werden, bewegt sich der Schieber 4 erneut nach oben, bis die Darmraupe 1 detektiert wird und abrollen kann. Sind alle Darmraupen einer Reihe R über die Vereinzelungskante 20 geschoben worden, erkennt dies die Steuerung 22 indem z.B. die Anzahl der Darmraupen wie nachfolgend beschrieben ermittelt wird - insbesondere aus dem Vergleich der Werte von Kalibergröße und Schieberposition. Der Schieber 4 bewegt sich dann wieder in entgegengesetzte Richtung nach unten. Die Rückwärtsbewegung kann auch durch einen Endschalter, der in der obersten Position des Schiebers betätigt wird, ausgelöst werden oder durch die Servoantriebsteuerung. Der Schieber kann dann an das untere Ende der Bodenwand 7 gelangen, wo er z.B. einen unteren Endschalter auslöst, wodurch die Bewegung des Schiebers 4 gestoppt wird und die Bewegungsrichtung des Schiebers 4 wieder umgekehrt wird. Es ist aber auch möglich, dass die Steuerung des Servoantriebs die Richtung umgekehrt. Wie aus Figur 2b hervorgeht, würde dann der Schieber eine weitere Reihe R₂ (nicht dargestellt) aufnehmen, die eine Anzahl von zwei Darmraupen aufweist. In diesem folgenden Hubzyklus würden dann zwei Darmraupen in Richtung Vereinzelungskante 20 geschoben werden und wenn beide Darmraupen nacheinander über die Kante 20 geschoben worden wären, würde sich der Schieber 4 zurückbewegen, wobei dann beispielsweise bei einem erneuten Hubzyklus nur noch eine Darmraupe auf dem Schieber aufliegen würde, wie in Figur 2c dargestellt ist. In Figur 2 c wird eine Darmraupe über die Vereinzelungskante 20 geschoben. Erfindungsgemäß wird der Füllgrad an Darmraupen im Darmraupenspeicher in Abhängigkeit der Anzahl der Darmraupen 1 einer Reihe R, die in einem Hubzyklus über die Vereinzelungskante geschoben werden, bestimmt.

Die Anzahl der Darmraupen einer Reihe ist im Wesentlichen proportional zum Füllgrad für einen bestimmten Darmraupendurchmesser.

Die Anzahl der Darmraupen in einer Reihe kann beispielsweise wie folgt bestimmt werden. Es kann die Anzahl der während eines Hubzyklus über die Vereinzelungskante 20 geschobenen Darmraupen in einer Reihe über das Sensorsignal des Sensors 16 gezählt werden, indem beispielsweise die Steuerung 22 ein Zähler, der die Sensorsignale in einem Hubzyklus aufaddiert, aufweist. Das heißt, dass beispielsweise eine bestimmte Anzahl, in Figur 2b drei, Darmraupen über die Kante 20 geschoben werden und dann keine weitere Darmraupe über den Sensor 16 detektiert wird, obwohl beispielsweise der Schieber 4 in seine obere Endposition verfahren wird. Die bestimmte Anzahl, bzw. ein dazu proportionaler Wert entspricht dann einem bestimmten Füllgrad, der für jedes Darmkaliber vorab empirisch ermittelt wurde.

Alternativ kann die Anzahl auch auf der Grundlage der Position des Schiebers 4 ermittelt werden, wobei der Steuerung 22 ein entsprechendes Signal S_{Positionschieber} von der Steuerung des Servoantriebs erhält. Das heißt, dass die Position P₁ des Schiebers (siehe Figur 2b) detektiert werden kann bzw. bekannt ist. Die Position ist die Position, die der Schieber aufweist, wenn der Sensor 16 im Bereich der Vereinzelungskante 20 eine oberste Darmraupe einer Reihe detektiert. Aufgrund dieser Position und dem eingegeben Signal S_{Kaliber}, die dem Durchmesser d einer Darmraupe entspricht, kann die Anzahl der Darmraupen bestimmt werden, die in einem Bereich zwischen Schieber 4 und Sensor 16 bzw. der Vereinzelungskante liegt.

In Abhängigkeit der bestimmten, das heißt ermittelten Anzahl an Darmraupen einer Reihe, die während eines Hubzyklus über die Vereinzelungskante 20 geschoben wird, kann dann ein entsprechendes Signal, zum Beispiel für eine optische und/oder akustische Anzeige, ausgegeben werden. Das Signal kann beispielsweise optisch als Füllstandsanzeige am Display bzw. Bedienfeld der Füllmaschine oder einem separaten Display/Signallampe angezeigt werden. Abhängig von der noch im Darmraupenspeicher vorhandenen Anzahl an Darmraupen kann das Signal an den Bediener auch verändert werden, zum Beispiel in Eskalationsstufen von langsam zunehmend schneller blinkend bis Dauerlicht am Bedienfeld oder an einer separaten Signallampe.

Ein intermittierendes akustisches Signal kann analog schneller und/oder lauter ertönen. Der Bediener kann somit den Füllgrad auf einfache Art und Weise überwachen und entsprechend reagieren und neue Darmraupen einfüllen.

Es ist auch möglich, dass in Abhängigkeit des bestimmten Füllgrades die Steuerung 22 ein Signal erzeugt, dass veranlasst, dass automatisch Darmraupen 1 über eine Zuführeinrichtung (nicht dargestellt) nachgeführt werden und/oder die Produktionsgeschwindigkeit reduziert wird, um einen kontinuierlichen Prozess zu gewährleisten.

Ein Warnsignal, das optisch und /oder akustisch angezeigt wird, wird spätestens ausgegeben, wenn die Anzahl der Darmraupen einer Reihe "1" ist, wie in Figuren 2c und 2d gezeigt ist.

Alternativ zu dem zuvor gezeigten Verfahren ist es auch möglich, dass mit der Lichtschranke die über die Vereinzelungskante 20 geschobenen Darmraupen gezählt werden und ein Signal erzeugt wird, das optisch und/oder akustisch angezeigt wird, wobei insbesondere ab einer bestimmten Anzahl ein Warnsignal ausgegeben und, wie zuvor beschrieben, optisch oder akustisch anzeigt, dass Darmraupen nachgefüllt werden müssen. Es kann, wenn der Bediener beispielsweise einen Karton mit bekannter Anzahl an Darmraupen in den Darmraupenspeicher einfüllt, der Zähler zurückgesetzt und mit einer neuen Zählung begonnen werden.

Unabhängig von der Ausführungsform kann die Anzeige im Bedienfeld der Füllmaschine oder an einer anderen Signaleinrichtung erfolgen. Auch eine Beleuchtung im Bodenbereich des Darmraupenspeichers ist denkbar. Der Füllgrad kann kontinuierlich angezeigt werden, so dass der Bediener erkennen kann wie viele Darmraupen noch im Speicher 3 sind. Zusätzlich oder alternativ kann bei einem Mindestbefüllgrad ein Warnsignal ausgegeben werden das zum Nachfüllen auffordert. Es besteht auch die Möglichkeit, dass der Bediener selbst durch Eingabe eines Mindestbefüllgrades den Zeitpunkt des Warnsignals festlegen kann. Je nach Produktionsleistung verbleibt dann genügend Zeit, um den Speicher nachzufüllen. Das Signal "niedriger Füllstand" kann auch elektrisch oder datentechnisch weiterverarbeitet werden.

## Patentansprüche

1. Verfahren zum Bestimmen des Füllgrads an Darmraupen (1) in einem Darmraupenspeicher (3) bei der Wurstherstellung, wobei zum Vereinzeln der Darmraupen (1) im Darmraupenspeicher (3) während eines ersten Hubzyklus eine Reihe R₁ mit einer ersten Anzahl hintereinanderliegender Darmraupen (1) mittels Schieber (4) entlang einer schiefen Ebene nacheinander über eine Vereinzelungskante (20) geschoben werden, und
nachdem die letzte Darmraupe (1) der Reihe R₁ über die Vereinzelungskante 20 geschoben wurde, sich der Schieber (4) entlang der schiefen Ebene zurückbewegt und eine Reihe R₂ mit einer zweiten Anzahl hintereinanderliegender Darmraupen (1) aufnimmt und in einem weiteren Hubzyklus in Richtung Vereinzelungskante (20) schiebt, **dadurch gekennzeichnet, dass** eine Steuerung (22) den Füllgrad an Darmraupen (1) im Darmraupenspeicher (3) über die Anzahl der Darmraupen, die über die Vereinzelungskante (20) geschobenen werden, bestimmt, wobei der Füllgrad an Darmraupen (1) im Darmraupenspeicher (3) in Abhängigkeit der Anzahl der Darmraupen (1) einer Reihe R, die in einem Hubzyklus über die Vereinzelungskante (20) geschoben werden, bevor sich der Schieber zurückbewegt, bestimmt wird.

2. Verfahren nach Anspruch 1, **dadurch gekennzeichnet, dass** eine Steuerung (22) spätestens dann ein Warnsignal ausgibt, wenn die Anzahl der Darmraupen einer Reihe "1" ist.

3. Verfahren nach mindestens einem der Ansprüche 1 bis 2, **dadurch gekennzeichnet, dass** im Bereich der Vereinzelungskante (20) ein Sensor (16), insbesondere eine Lichtschranke vorgesehen ist, die erkennt, ob eine Darmraupe (1) die Vereinzelungskante passiert hat.

4. Verfahren nach mindestens Anspruch 3, **dadurch gekennzeichnet, dass** die Steuerung (22) den Füllgrad mit Hilfe des Sensors (16) und insbesondere zusätzlich über den gespeicherten Darmraupendurchmesser und/oder die Position des Schiebers ermittelt.

5. Verfahren nach mindestens einem der Ansprüche 1 bis 4, **dadurch gekennzeichnet, dass** in Abhängigkeit des bestimmten Füllgrads ein Signal für eine optische und/oder akustische Anzeige des Füllgrads ausgegeben wird und sich vorzugsweise das Signal und die Anzeige in Abhängigkeit des Füllgrads ändern.

6. Verfahren nach mindestens einem der Ansprüche 1 bis 5, **dadurch gekennzeichnet, dass**, insbesondere bei Unterschreiten eines Mindestfüllgrads ein Warnsignal ausgegeben wird das optisch und/oder akustisch angezeigt wird.

7. Verfahren nach mindestens einem der Ansprüche 1 bis 6, **dadurch gekennzeichnet, dass** die Anzahl der während eines Hubzyklus über die Vereinzelungskante (20) geschobenen Darmraupen in einer Reihe über das Sensorsignal gezählt wird
und/oder die Anzahl auf der Grundlage der Position des Schiebers (4), die er aufweist, wenn ein Sensor (16) im Bereich der Vereinzelungskante (20) eine oberste Darmraupe einer Reihe detektiert, und dem Durchmesser der Darmraupen ermittelt wird.

8. Verfahren nach mindestens einem der Ansprüche 1 bis 7, **dadurch gekennzeichnet, dass** die Anzahl der nach dem Einfüllen von Darmraupen (1) in den Darmraupenspeicher (3) über die Vereinzelungskante (20) geschobenen Darmraupen (1) gezählt wird.

9. Verfahren nach mindestens einem der Ansprüche 1 bis 8, **dadurch gekennzeichnet, dass** in Abhängigkeit des bestimmten Füllgrades ein Signal erzeugt wird, dass veranlasst, dass automatisch Darmraupen (1) über eine Zuführeinrichtung dem Darmraupenspeicher (3) zugeführt werden und/oder die Produktionsgeschwindigkeit reduziert wird.

10. Vorrichtung zum Durchführen des Verfahrens nach mindestens einem der Ansprüche 1 bis 8, mit einem Darmraupenspeicher (3) zur Aufnahme von Darmraupen,
einem Schieber (4), der in einem ersten Hubzyklus eine Reihe mit einer ersten Anzahl hintereinanderliegender Darmraupen (1) entlang einer schiefen Ebene nacheinander über die Vereinzelungskante (20) schieben kann und
der sich entlang der schiefen Ebene zurückbewegen kann, nachdem die letzte Darmraupe der Reihe R₁ über die Vereinzelungskante (20) geschoben wurde und nachfolgend eine Reihe R₂ mit einer zweiten Anzahl hintereinanderliegenden Darmraupen (1) aufnehmen und in einem weiteren Hubzyklus in Richtung Vereinzelungskante (20) schieben kann
**gekennzeichnet durch**
eine Steuerung (22), die derart ausgebildet ist, dass der Füllgrad an Darmraupen (1) im Darmraupenspeicher (3) über die Anzahl der Darmraupen, die über die Vereinzelungskante (20) geschobenen werden, bestimmt werden kann, wobei der Füllgrad an Darmraupen (1) im Darmraupenspeicher (3) in Abhängigkeit der Anzahl an Darmraupen (1) einer Reihe R, die in einem Hubzyklus über die Vereinzelungskante (20) geschoben werden, bevor sich der Schieber zurückbewegt, bestimmt werden kann.

## Claims

1. Method for determining the filling level of shirred casing sticks (1) in a shirred casing stick storage (3) in the sausage production, where, for separating said shirred casing sticks (1),
in said shirred casing sticks storage (3) a row R₁ with a first number of consecutively disposed shirred casing sticks (1) is pushed by a pusher (4) during a first stroke cycle along a sloped plane over a separation edge (20), and
once the last shirred casing stick (1) of said row R₁ has been pushed over said separation edge 20, said pusher (4) moves back along said sloped plane and a row R₂ with a second number of consecutively disposed shirred casing sticks (1) is taken by said pusher (4) and pushed in a further stroke cycle in the direction towards said separation edge (20), **characterized in that**
a control device (22) determines the filling level of shirred casing sticks (1) in said shirred casing stick storage (3) from the number of shirred casing sticks pushed over said separation edge (20),
wherein
the filling level of shirred casing sticks (1) in said shirred casing stick storage (3) is determined in dependence of the number of shirred casing sticks (1) of a row R₁ which are pushed over said separation edge (20) in a stroke cycle before said pusher again moves back i.

2. Method according toclaim 1, **characterized in that** a control device (22) outputs a warning signal at the latest when the number of shirred casing sticks of a row is "1".

3. Method according to at least one of the claims 1 to 2, **characterized in that** a sensor (16), in particular a light barrier, is provide in the region of said separation edge (20) and detects whether a shirred casing stick (1) has passed said separation edge.

4. Method according to at least claim 3, **characterized in that** said control device (22) determines the filling level with the aid of said sensor (16) and in particular additionally by way of the shirred casing stick diameter stored and/or the position of said pusher.

5. Method according to at least one of the claims 1 to 4, **characterized in that** a signal for an optical and/or acoustic display of the filling level is output in dependence of the filling level determined and said signal and said display preferably change in dependence of the filling level.

6. Method according to at least one of the claims 1 to 5, **characterized in that** a warning signal is output, in particular when a minimum filling level is undercut, and is visually and/or acoustically indicated.

7. Method according to at least one of the claims 1 to 6, **characterized in that** the number of shirred casing sticks in a row pushed over said separation edge (20) during a stroke cycle is counted by way of said sensor signal.
and/or the number is determined on the basis of the position of said pusher (4) that it assumes when a sensor (16) detects an uppermost shirred casing stick of a row in the region of said separation edge (20) and on the basis of the diameter of said shirred casing sticks.

8. Method according to at least one of the claims 1 to 7, **characterized in that** the number of shirred casing sticks (1) pushed over said separation edge (20) after filling shirred casing sticks (1) into said shirred casing stick storage (3) is counted.

9. Method according to at least one of the claims 1 to 8, **characterized in that** a signal is generated in dependence of the filling level determined and causes shirred casing sticks (1) to be fed to said shirred casing stick storage (3) in an automated manner by a feed device and/or that the production speed is reduced.

10. Device for performing the method according to at least one of the claims 1 to 8 with a shirred casing stick storage (3) for the accommodating shirred casing sticks,
a pusher (4), which can push a row with a first number of consecutively disposed shirred casing sticks (1) in a first stroke cycle along a sloped plane one after the other over said separation edge (20), and
which can move back along said sloped plane after the last shirred casing stick of said row R₁ has been pushed over said separation edge (20) and can then take a subsequent row R₂ with a second number of consecutively disposed shirred casing sticks (1) and push them in a further stroke cycle in the direction of said separation edge (20),
**characterized by**
a control device (22) formed such that the filling level of shirred casing sticks (1) in said shirred casing stick storage (3) can be determined from the number of shirred casing sticks pushed over said separation edge (20) wherein
the filling level of shirred casing sticks (1) in said shirred casing stick storage (3) can be determined in dependence of the number of shirred casing sticks (1) of a row R which are pushed over said separation edge (20) in a stroke cycle before said pusher again moves back.

## Revendications

1. Procédé pour déterminer le degré de remplissage de boyaux froncés (1) dans un dispositif de stockage de boyaux froncés (3) lors de la fabrication de saucisses, dans lequel, pour séparer les boyaux froncés (1) dans le dispositif de stockage de boyaux froncés (3) pendant un premier cycle de levage, une rangée R₁ avec un premier nombre de boyaux froncés (1) situés les uns derrière les autres sont poussés successivement au moyen d'un coulisseau (4) le long d'un plan incliné au-dessus d'un bord de séparation (20), et
après que le dernier boyau froncé (1) de la rangée R₁ ait été poussé au-dessus du bord de séparation (20), le coulisseau (4) se déplace en arrière le long du plan incliné et reçoit une rangée R₂ avec un second nombre de boyaux froncés (1) situés les uns derrière les autres et pousse dans un cycle de levage supplémentaire dans la direction du bord de séparation (20), **caractérisé en ce**
**qu'**une commande (22) détermine le degré de remplissage de boyaux froncés (1) dans le dispositif de stockage de boyaux froncés (3) par le nombre des boyaux froncés qui sont poussés au-dessus du bord de séparation (20), dans lequel le degré de remplissage de boyaux froncés (1) dans le dispositif de stockage de boyaux froncés (3) est déterminé en fonction du nombre de boyaux froncés (1) d'une rangée R qui sont poussés dans un cycle de levage au-dessus du bord de séparation (20) avant que le coulisseau ne se déplace en arrière.

2. Procédé selon la revendication 1, **caractérisé en ce qu'**une commande (22) délivre en sortie un signal d'avertissement au plus tard lorsque le nombre de boyaux froncés d'une rangée est « 1 ».

3. Procédé selon au moins l'une quelconque des revendications 1 à 2, **caractérisé en ce qu'**un capteur (16) est prévu dans la zone du bord de séparation (20), en particulier une barrière photoélectrique, qui détecte si un boyau froncé (1) a passé le bord de séparation.

4. Procédé selon au moins la revendication 3, **caractérisé en ce que** la commande (22) détermine le degré de remplissage à l'aide du capteur (16) et en particulier en plus par l'intermédiaire du diamètre de boyau froncé et/ou de la position du coulisseau.

5. Procédé selon au moins l'une quelconque des revendications 1 à 4, **caractérisé en ce qu'**en fonction du degré de remplissage déterminé, un signal est délivré en sortie pour une annonce optique et/ou acoustique du degré de remplissage et de préférence le signal et l'annonce changent en fonction du degré de remplissage.

6. Procédé selon au moins l'une quelconque des revendications 1 à 5, **caractérisé en ce qu'**un signal d'avertissement est délivré en sortie, qui est annoncé de manière optique et/ou acoustique, en particulier en cas de dépassement d'un degré de remplissage minimum.

7. Procédé selon au moins l'une quelconque des revendications 1 à 6, **caractérisé en ce que** le nombre de boyaux froncés poussés au-dessus du bord de séparation (20) pendant un cycle de levage est compté dans une rangée via le signal de capteur et/ou le nombre est déterminé sur la base de la position du coulisseau (4) qu'il présente, lorsqu'un capteur (16) détecte un boyau froncé supérieur d'une rangée dans la zone du bord de séparation (20), et du diamètre des boyaux froncés.

8. Procédé selon au moins l'une quelconque des revendications 1 à 7, **caractérisé en ce que** le nombre de boyaux froncés (1) poussés au-dessus du bord de séparation (20) est compté après le remplissage de boyaux froncés (1) dans le dispositif de stockage de boyaux froncés (3).

9. Procédé selon au moins l'une quelconque des revendications 1 à 8, **caractérisé en ce qu'**un signal est généré en fonction du degré de remplissage déterminé, qui amène des boyaux froncés (1) à être acheminés automatiquement vers le dispositif de stockage de boyaux froncés (3) par l'intermédiaire d'un dispositif d'acheminement et/ou la vitesse de production à être réduite.

10. Dispositif pour mettre en oeuvre le procédé selon au moins l'une quelconque des revendications 1 à 8, comprenant un dispositif de stockage de boyaux froncés (3) pour recevoir des boyaux froncés,
un coulisseau (4) qui, lors d'un premier cycle de levage, peut pousser successivement une rangée de boyaux froncés (1) situés les uns derrière les autres le long d'un plan incliné au-dessus du bord de séparation (20), et
qui peut se déplacer en arrière le long du plan incliné après que le dernier boyau froncé de la rangé R₁ ait été poussé au-dessus du bord de séparation (20) et peut ensuite recevoir une série R₂ avec un second nombre de boyaux froncés (1) situés les uns derrière les autres et peut pousser dans un cycle de levage supplémentaire dans la direction du bord de séparation (20)
**caractérisé par**
une commande (22) qui est conçue de telle sorte que le degré de remplissage des boyaux froncés (1) dans le dispositif de stockage de boyaux froncés (3) peut être déterminé par le nombre de boyaux froncés qui sont poussés au-dessus du bord de séparation (20), dans lequel le degré de remplissage des boyaux froncés (1) dans le dispositif de stockage de boyaux froncés (3) peut être déterminé en fonction du nombre de boyaux froncés (1) d'une rangée R, qui sont poussés dans un cycle de levage au-dessus du bord de séparation (20) avant que le coulisseau ne se déplace en arrière.
